(19) Europäisches Patentamt
European Patent Office
Office européen des brevets

(11) **EP 3 116 216 A1**

(12) **EUROPEAN PATENT APPLICATION**
published in accordance with Art. 153(4) EPC

(43) Date of publication:
**11.01.2017 Bulletin 2017/02**

(51) Int Cl.:
***H04N 5/369*** *(2011.01)*     ***G02B 13/00*** *(2006.01)*

(21) Application number: **14884769.2**

(86) International application number:
**PCT/JP2014/006065**

(22) Date of filing: **04.12.2014**

(87) International publication number:
**WO 2015/132831 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.03.2014 JP 2014040455**

(71) Applicant: **Panasonic Intellectual Property Management Co., Ltd.**
**Osaka-shi, Osaka 540-6207 (JP)**

(72) Inventor: **ISHIGAMI, Tomohide**
**Osaka-shi, Osaka 540-6207 (JP)**

(74) Representative: **Vigand, Philippe et al**
**Novagraaf International SA**
**Chemin de l'Echo 3**
**1213 Onex (CH)**

(54) **IMAGE PICKUP APPARATUS**

(57) The present disclosure is intended to provide an image capture device having high resolution in reconstruction. The image capture device of the present disclosure, which is capable of recording light information including a traveling direction of light and intensity of the light in the traveling direction, includes a main lens; an image sensor; a microlens array that is placed between the main lens and the image sensor and has a predetermined vertical rotation angle relative to the image sensor; and a signal processing unit for generating a refocused image on a virtual image plane at any given focal position using the light information.

FIG. 1

**Description**

TECHNICAL FIELD

The present disclosure relates to a light-field camera that extracts and records the direction of light rays using microlenses.

BACKGROUND ART

In recent years, a refocusable light-field camera has been available that has an integrated optical system and image sensor, focuses on a desired position after shooting, and generates an image at any given focal position. A light-field camera is disclosed, for example, in NPL 1.

The light-field camera is comprised of a main lens, a microlens array, and an image sensor. Light from a subject passes through the main lens and then through the microlens array and is incident on the image sensor. Unlike a typical camera, a light-receiving surface of the image sensor includes information about a traveling direction of the light as well as the intensity of the light because the directions of the light are identified and recorded in the image sensor.

As such, refocusing can be made that generates an image at any given focal position after shooting. For example, projection from pixels that convert light received in the image sensor to electrical signals onto a virtual image plane in the direction of light rays enables a refocused image for the case of the image sensor being placed on the virtual image plane to be generated.

Citation List

Non-Patent Literature

NPL 1: Ren. Ng, et al, "Light Field Photography with a Hand-Held Plenoptic Camera", Stanford Tech Report CTSR 2005-2

SUMMARY OF THE INVENTION

The present disclosure provides an image capture device that improves image resolution when a refocused image at any given focal position is generated by reconstructing an image with a light-field camera.

The image capture device of the present disclosure, which is capable of recording light information including a traveling direction of light and intensity of the light in the traveling direction, includes a main lens , an image sensor, a microlens array that is placed between the main lens and the image sensor and has a predetermined vertical rotation angle relative to the image sensor, and a signal processing unit for generating a refocused image on a virtual image plane at any given focal position using the light information.

The image capture device of the present disclosure can improve the image resolution when the refocused image is generated by reconstructing an image with the light-field camera.

BRIEF DESCRIPTION OF DRAWINGS

FIG. 1 is a block diagram showing a configuration of a light-field camera according to a first exemplary embodiment.
FIG. 2 shows a distribution of ray centers on a virtual image plane.
FIG. 3 is a diagram illustrating a method of calculating a position of a ray center on the virtual image plane according to the first exemplary embodiment.
FIG. 4 is a flow chart showing a procedure for calculating a cost value using a cost function with respect to any given vertical rotation angle of a microlens array relative to an image sensor according to the first exemplary embodiment.
FIG. 5 is a diagram illustrating an example of the cost function according to the first exemplary embodiment.
FIG. 6 shows mean values of the cost function for vertical rotation angles of the microlens array relative to the image sensor according to the first exemplary embodiment.
FIG. 7 shows mean values of the cost function for refocusing distances when vertical rotation angles of the microlens array relative to the image sensor are 0 degrees and 6.6 degrees according to the first exemplary embodiment.
FIG. 8 shows a distribution of the ray centers at a refocusing distance of about +4.5 according to the first exemplary embodiment.
FIG. 9 shows a distribution of the ray centers at a refocusing distance of about +2.5 according to the first exemplary embodiment.

FIG. 10 shows a distribution of the ray centers at a refocusing distance of about -3.5 according to the first exemplary embodiment.

FIG. 11 shows mean values of the cost function for vertical rotation angles of another microlens array relative to the image sensor according to the first exemplary embodiment.

FIG. 12 shows mean values of the cost function for vertical rotation angles of yet another microlens array relative to the image sensor according to the first exemplary embodiment.

## DESCRIPTION OF EMBODIMENT

An exemplary embodiment will now be described in detail with reference to the drawings as appropriate. However, unnecessarily detailed description may occasionally be omitted. For example, detailed description of well-known matters and redundant description of substantially the same configurations may occasionally be omitted. The omission of these items is to avoid the following description from becoming unnecessarily redundant, and to ease understanding of those skilled in the art.

Note that, the following description and the accompanying drawings are provided to allow any person skilled in the art to fully understand the present disclosure, and that it is not intended to limit the subject matter described in the claims by the following description and the accompanying drawings.

## FIRST EXEMPLARY EMBODIMENT

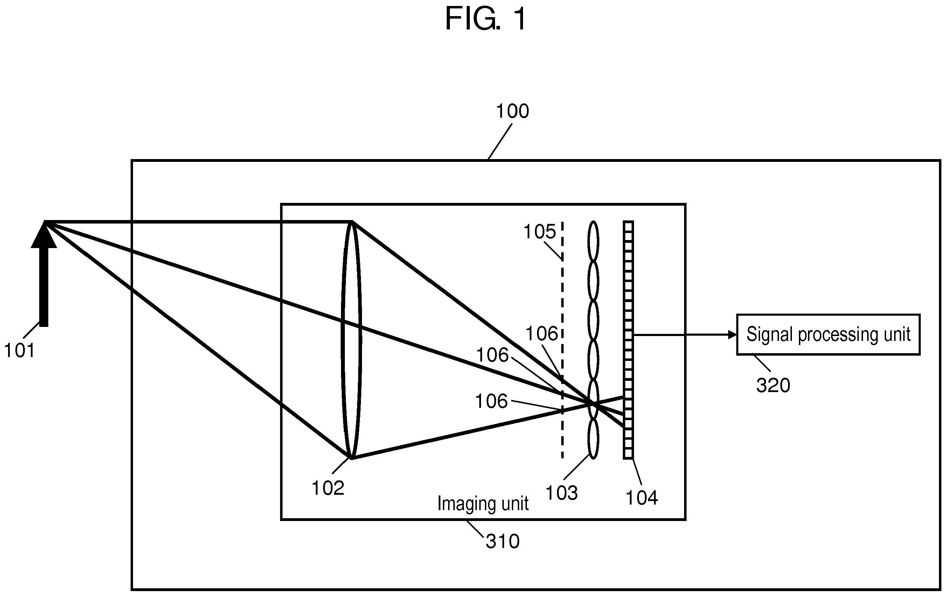

A first exemplary embodiment is described below with reference to FIGS. 1 to 12.

[1-1 Relationship between ray centers and image resolution]

The relationship between ray centers and image resolution is first described. When a light-field camera processes pixels that convert light received in an image sensor to electrical signals, reconstructs an image, and generates a refocused image, ray centers play an important role. A "ray center" is a point at which a light ray projected from the image sensor onto a virtual image plane in a direction of the light ray intersects the virtual image plane where an image is reconstructed according to any given focal position. Thus, each of pixels of the image to be reconstructed is complemented using a ray center in the vicinity of each pixel in the image to be reconstructed of ray centers on the virtual image plane projected from the image sensor onto the virtual image plane in the direction of light rays. Here, a number of the ray centers is fixed by a number of pixels of the image sensor so that if the ray centers on the virtual image plane gather at a certain point, the image resolution in reconstruction is reduced in a region where density indicating a degree of gathering of the ray centers on the virtual image plane is low.

[1-2 Configuration of light-field camera]

A light-field camera as an image capture device is described in the first exemplary embodiment. FIG. 1 shows a configuration of a light-field camera according to the first exemplary embodiment. Referring to FIG. 1, light-field camera 100 captures subject 101. Light-field camera 100 includes imaging unit 310 and signal processing unit 320. Imaging unit 310 includes main lens 102, microlens array 103, and image sensor 104. Signal processing unit 320 is fabricated using a processor, such as an LSI (Large Scale Integration).

Light passing through subject 101 passes through main lens 102 and microlens array 103 and is recorded by image sensor 104, at which time not only the intensity of the light but also a traveling direction of the light is recorded simultaneously in each of pixels of image sensor 104.

The pixels, which convert the light received in image sensor 104 to electrical signals, transmit the electrical signals to signal processing unit 320. When virtual image plane 105 is provided by virtually disposing image sensor 104 on any given plane in a space in order to reconstruct an image to be captured at any given focal position, signal processing unit 320 calculates positions of ray centers 106 projected from the pixels of image sensor 104 onto virtual image plane 105 in the direction of light rays. The image is then reconstructed using ray centers 106 and thus a refocused image is generated on virtual image plane 105.

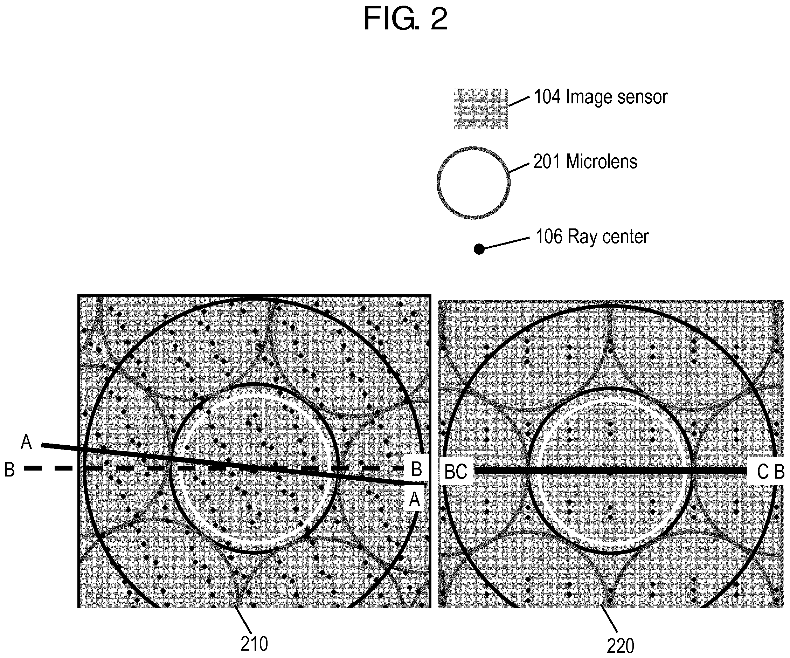

FIG. 2 shows a distribution of ray centers on the virtual image plane. Microlens array 103 having a diameter of about 18 pixels is arranged in a honeycomb structure and image sensor 104 has a Bayer array. Distribution 210 of the ray centers represents a distribution of ray centers of light-field camera 100 according to the present embodiment.

In FIG. 2 showing distribution 210 of the ray centers, line A-A connecting centers of three adjacent microlenses 201 of microlenses 201 making up microlens array 103 and horizontal direction B-B of image sensor 104 are not parallel to each other, i.e., they have a predetermined angle between them, and line A-A connecting the centers of three adjacent microlenses 201 of microlenses 201 is inclined with respect to horizontal direction B-B of image sensor 104. That is, microlens array 103 has a predetermined vertical rotation angle relative to image sensor 104.

In FIG. 2, distribution 220 of the ray centers represents a distribution of ray centers of a conventional light-field camera. As for distribution 220 of the ray centers, line C-C connecting centers of three adjacent microlenses 201 of microlenses 201 making up microlens array 103 and horizontal direction B-B of image sensor 104 are parallel to each other and are not inclined. That is, the microlens array is not rotated vertically relative to the image sensor.

When distribution 210 of the ray centers is compared with distribution 220 of the ray centers in FIG. 2, distribution 210 of the ray centers is characterized in that the ray centers are less overlapped and a density of the ray centers is high on virtual image plane 105. High density of the ray centers on virtual image plane 105 increases image resolution when the image is reconstructed and a refocused image is generated. That is, microlens array 103 has a vertical rotation angle relative to image sensor 104 so that the density of the ray centers projected onto virtual image plane 105 is higher.

In light-field camera 100 configured as above, an optimum rotation angle of microlens array 103 relative to image sensor 104 has been calculated, which is described below.

[1-3 Optimum rotation angle]

[1-3-1 Position of ray center]

A method of calculating a position of a ray center on virtual image plane 105 is first described.

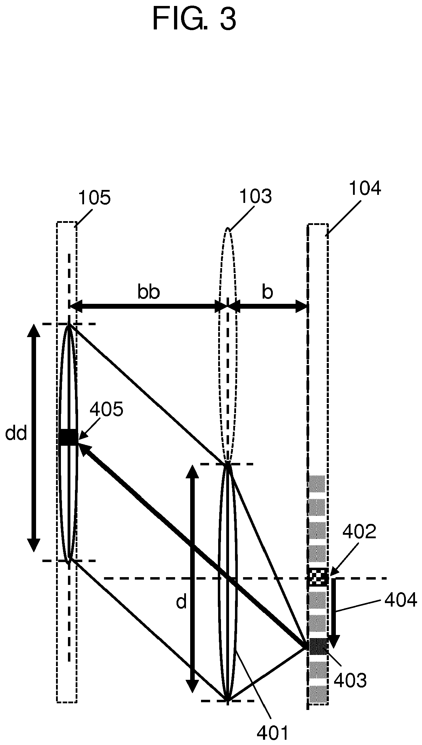

FIG. 3 is a diagram illustrating the method of calculating the position of a ray center on the virtual image plane according to the first exemplary embodiment. In FIG. 3, "b" is a distance between microlens array 103 and image sensor 104; "bb" is a distance between microlens array 103 and virtual image plane 105.

A coordinate of center position 402, i.e., a position at which a dashed line extending horizontally from a center position of i-th microlens 401 of microlens array 103 toward image sensor 104 intersects with image sensor 104, is represented as follows:

[EQ 1]

$$(MLA[i].Cx, \quad MLA[i].Cy)$$

Pixel 403 is any given pixel of image sensor 104, and direction vector 404 from center position 402 to pixel 403 is represented as follows:

[EQ 2]

$$(DirX, \quad DirY)$$

Where, "d" is a diameter of i-th microlense 401.

Assuming the light passes through i-th microlens 401 and travels in a straight line, coordinate 405 of the ray center projected onto virtual image plane 105 from pixel 403 of image sensor 104 is represented as follows:

[EQ 3]

$$\left(MLA[i].Cx + \frac{bb}{b} DirX, \quad MLA[i].Cy + \frac{bb}{b} DirY\right)$$

Where, "dd" is a width of a light ray on virtual image plane 105. Assuming the light ray captured through diameter d of i-th microlens 401 is collected in pixel 403 of image sensor 104, dd is equal to d. Thus, the position of the ray center and the width of the light ray projected from each pixel of image sensor 104 onto virtual image plane 105 can be calculated.

[1-3-2. Calculation of cost value]

Evaluation is performed using a cost function in order to calculate an optimum vertical rotation angle of microlens array 103 relative to image sensor 104. Specifically, the vertical rotation angle of microlens array 103 relative to image sensor 104 is varied from 0 to 30 degrees in increments of 0.1 degrees, and a cost value is calculated for each rotation angle using the cost function. The optimum vertical rotation angle of microlens array 103 relative to image sensor 104 has been found through the evaluation using the cost values calculated.

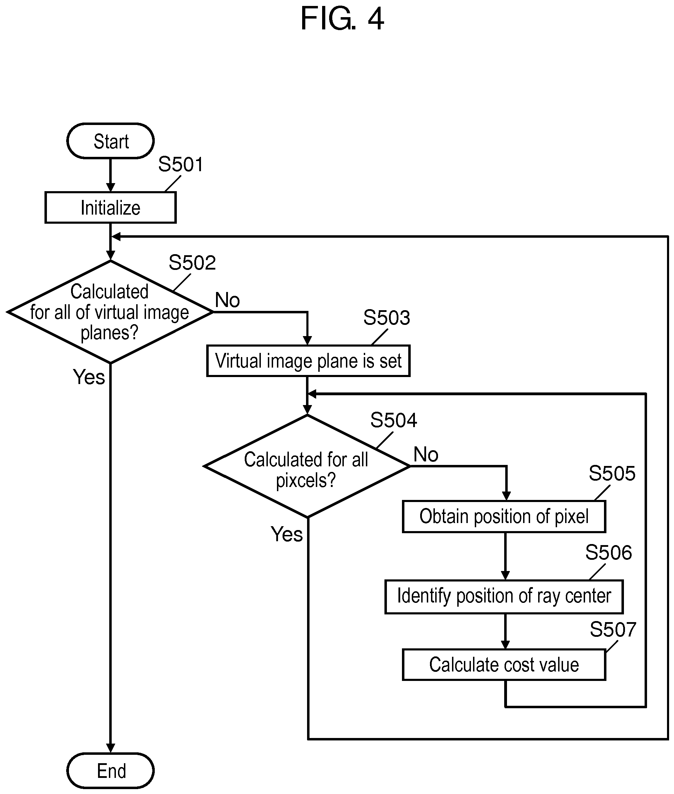

Here, a procedure is described that calculates a cost value using the cost function with respect to any given vertical rotation angle of microlens array 103 relative to image sensor 104. FIG. 4 is a flow chart showing the procedure for calculating the cost value using the cost function with respect to any given vertical rotation angle of microlens array 103 relative to image sensor 104.

The cost values for any given vertical rotation angle of microlens array 103 relative to image sensor 104 are calculated for all of virtual image planes envisioned. All of the virtual image planes 105 envisioned are all virtual image planes 105 at refocusing distances that are determined at predetermined intervals within a predetermined focal length from image sensor 104.

(S501) Cost values, variables, etc. of the cost function are first initialized to zero.

(S502) It is then determined whether processing for all of the virtual image planes envisioned has been completed. When all processing has been completed (when Yes), cost values and angles at which the cost values has been calculated are output and the process is terminated. When processing of all the virtual image planes envisioned is not completed (when No), the process proceeds to step S503.

(S503) A virtual image plane at a refocusing distance of interest is set at the predetermined interval.

(S504) It is then determined whether the cost values are calculated for all pixels within a specified range on the virtual image plane set. When the cost values have been calculated for all the pixels (when Yes), the process returns to step S502. When the cost values are not calculated for all the pixels within the specified range (when No), the process proceeds to step S505.

(S505) A position of a pixel within the specified range on the virtual image plane for which calculation is not performed is obtained.

(S506) Step 506 searches for a ray center nearest to the position of the pixel obtained in step S505 with regard to the positions of the ray centers that are projected from the pixels of image sensor 104 onto virtual image plane 105 based on pre-calculation and identifies a position of the ray center.

(S507) Step 507 obtains a distance between the position of the ray center determined in step S506 and the position of the pixel obtained in step S505 as the cost value and returns to step S504.

[1-3-3. Example of cost function]

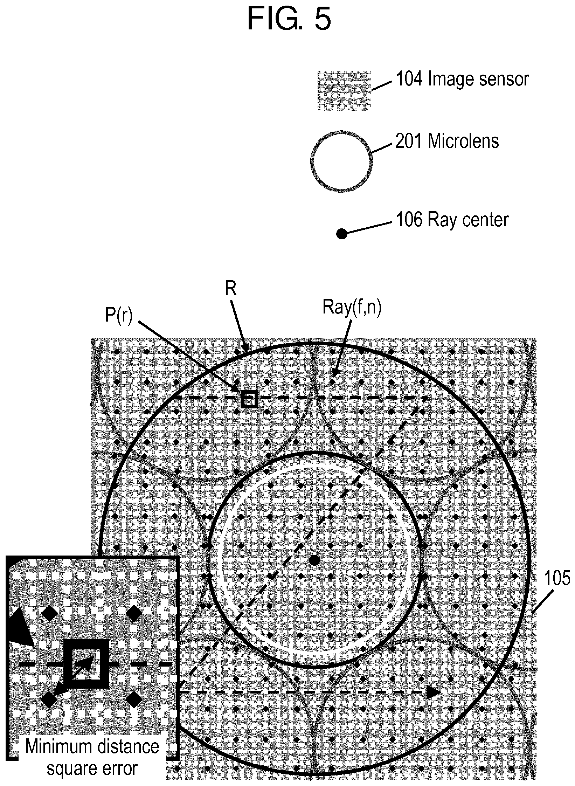

The cost function to calculate a cost value will now be described in detail. FIG.5 is a diagram illustrating an example of the cost function according to the first exemplary embodiment. In FIG. 5, R is a specified range on virtual image plane 105 to identify a range in which the cost function is calculated, and a position of r-th pixel P(r) of interest within specified range R is defined as follows:

[EQ 4]

$$P(r) = (x_r, y_r)$$

Representing a position of virtual image plane 105 as f, position Ray(f, n) of a ray center when n-th pixel of image sensor 104 is projected onto virtual image plane 105 at position f is defined as follows:

[EQ 5]

$$Ray(f, n) = (x_{f,n}, y_{f,n})$$

Here, if distance Dist(P(r), Ray(f, n)) between position P(r) of the pixel of interest and position Ray(f, n) of the ray center is defined, for example, as a minimum distance square error, distance Dist(P(r), Ray(f, n)) is represented as follows:

$$[EQ\ 6]$$

$$Dist(P(r), Ray(f,n)) = (x_r - x_{f,n})^2 + (y_r - y_{f,n})^2$$

Cost function Cost(focus, R, N) can be defined as follows:

$$[EQ\ 7]$$

$$Cost(focus, R, N) = \sum_{f \in focus} \sum_{r \in R} \min_{n \in N}(Dist(p(r), Ray(f,n)))$$

where focus is a set of all the virtual image planes envisioned, R is the specified range, and N is a set of all pixels of image sensor 104.

The cost function defined by EQ 7 is equivalent to evaluating the distances between the respective positions of the pixels to be reconstructed and positions of the ray centers used for reconstruction within specified range R, i.e., within a range of the image to be reconstructed for all the virtual image planes 105 envisioned. EQ 7 is based on the idea that the closer overall distances between the positions of the pixels to be reconstructed and the positions of the ray centers are, the higher the density of the ray centers on virtual image plane 105 is and the higher resolution can be obtained.

[1-3-4. Calculation of optimum rotation angle]

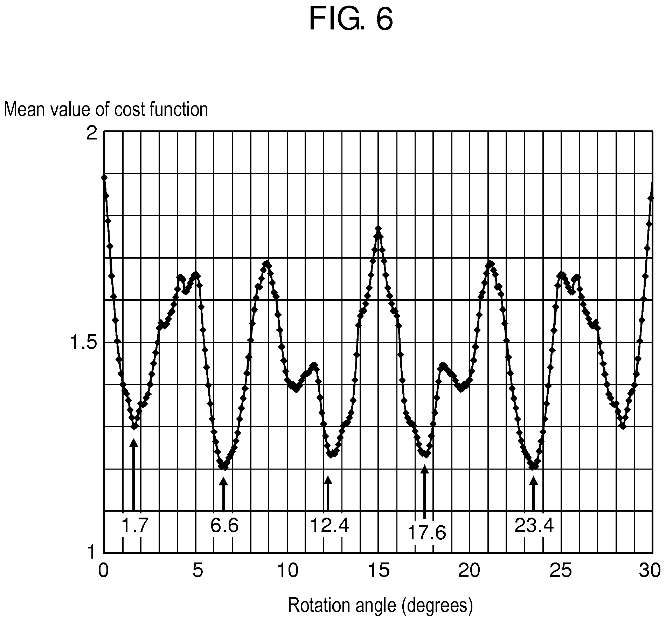

The optimum vertical rotation angle of microlens array 103 relative to image sensor 104 has been found using cost function defined by EQ 7, which is described with reference to FIGS. 6 to 10.

FIG. 6 shows mean values of the cost function for vertical rotation angles of microlens array 103 relative to image sensor 104. In FIG. 6, the horizontal axis represents the vertical rotation angle of microlens array 103 relative to image sensor 104 and the vertical axis represents the mean value of the cost function.

The mean value of the cost function is a value obtained by dividing the calculated cost value by a number of pixels on virtual image plane 105 used for calculation. The lower the mean value of the cost function is, the image can be reconstructed in higher resolution.

In FIG. 6, the mean values of the cost function are plotted in increments of 0.1 degrees from 0 to 30 degrees of the vertical rotation angle of microlens array 103 relative to image sensor 104, resulting that the mean value of the cost function is highest when the vertical rotation angle of microlens array 103 relative to image sensor 104 is 0 degrees; the mean value of the cost function is lowest when the vertical rotation angle of microlens array 103 relative to image sensor 104 is 6.6 degrees. When the vertical rotation angle of microlens array 103 relative to image sensor 104 is between about 1.7 degrees and about 28.3 degrees, the mean value of the cost function is lower than that at a vertical rotation angle of microlens array 103 relative to image sensor 104 of 0 degrees so that the image can be reconstructed in high resolution. Additionally, the mean values of the cost function are local minima when vertical rotation angles of microlens array 103 relative to image sensor 104 are about 1.7 degrees, about 6.6 degrees, about 12.4 degrees, about 17.6 degrees, and about 23.4 degrees, thereby enabling the image to be reconstructed in higher resolution.

The relationship of the mean value of the cost function with respect to the refocusing distance, i.e., a distance from image sensor 104 to virtual image plane 105, when vertical rotation angles of microlens array 103 relative to image sensor 104 are about 0 degrees and about 6.6 degrees will now be described.

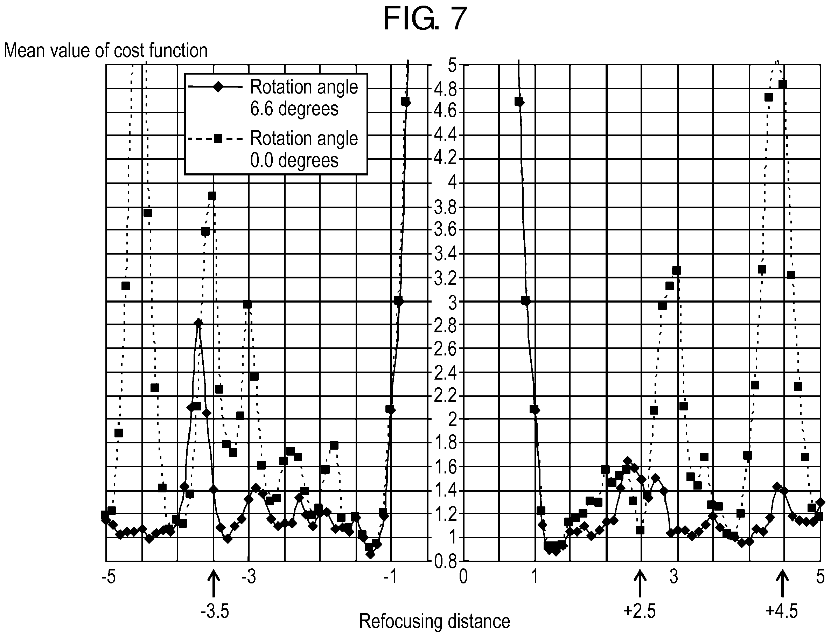

FIG. 7 shows mean values of the cost function for refocusing distances when vertical rotation angles of microlens array 103 relative to image sensor 104 are 0 degrees and 6.6 degrees. The refocusing distance on the horizontal axis represents a relative distance when the distance between microlens array 103 and image sensor 104 is assumed to be 1. FIG. 7 is a graph showing mean values of the cost function when the refocusing distance is varied from -5 to +5, where an interval between refocusing distances -1 and +1 is not evaluated. Distributions of the ray centers on virtual image plane 105 for refocusing distances of about +4.5, about +2.5, and about -3.5 depicted in FIG. 7 are described.

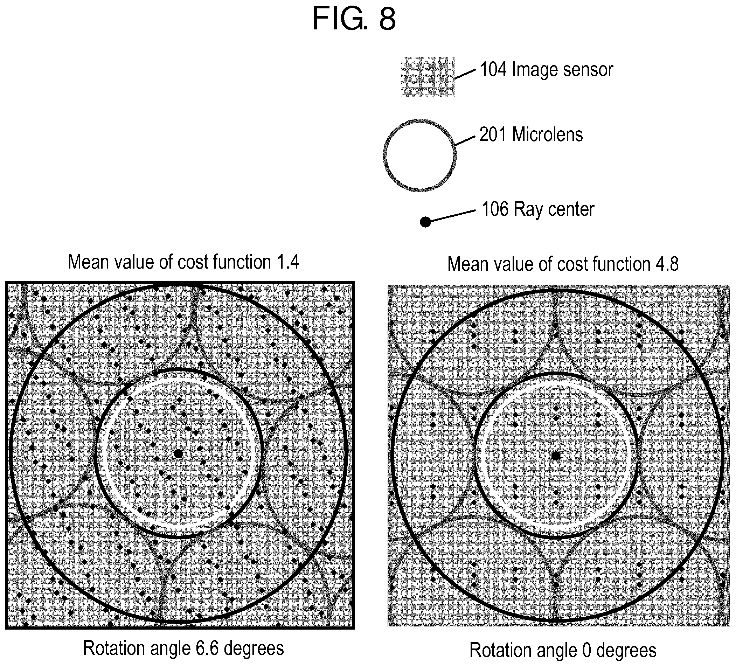

FIG. 8 shows a distribution of the ray centers at a refocusing distance of about +4.5. The left-hand side of FIG. 8 shows a distribution of the ray centers when the vertical rotation angle of microlens array 103 relative to image sensor 104 is 6.6 degrees; the right-hand side of FIG. 8 shows a distribution of the ray centers when the vertical rotation angle of microlens array 103 relative to image sensor 104 is 0 degrees. A mean value of the cost function is 1.4 when the vertical rotation angle of microlens array 103 relative to image sensor 104 is 6.6 degrees; a mean value of the cost function is 4.8 when the vertical rotation angle of microlens array 103 relative to image sensor 104 is 0 degrees.

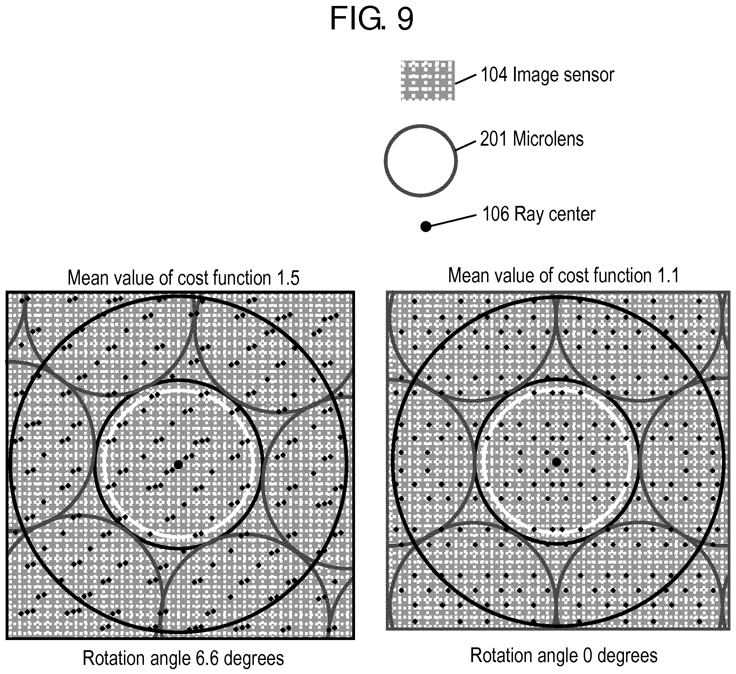

FIG. 9 shows a distribution of the ray centers at a refocusing distance of about +2.5. The left-hand side of FIG. 9 shows a distribution of the ray centers when the vertical rotation angle of microlens array 103 relative to image sensor 104 is 6.6 degrees; the right-hand side of FIG. 8 shows a distribution of the ray centers when the vertical rotation angle of microlens array 103 relative to image sensor 104 is 0 degrees. A mean value of the cost function is 1.5 when the vertical rotation angle of microlens array 103 relative to image sensor 104 is 6.6 degrees; a mean value of the cost function is 1.1 when the vertical rotation angle of microlens array 103 relative to image sensor 104 is 0 degrees.

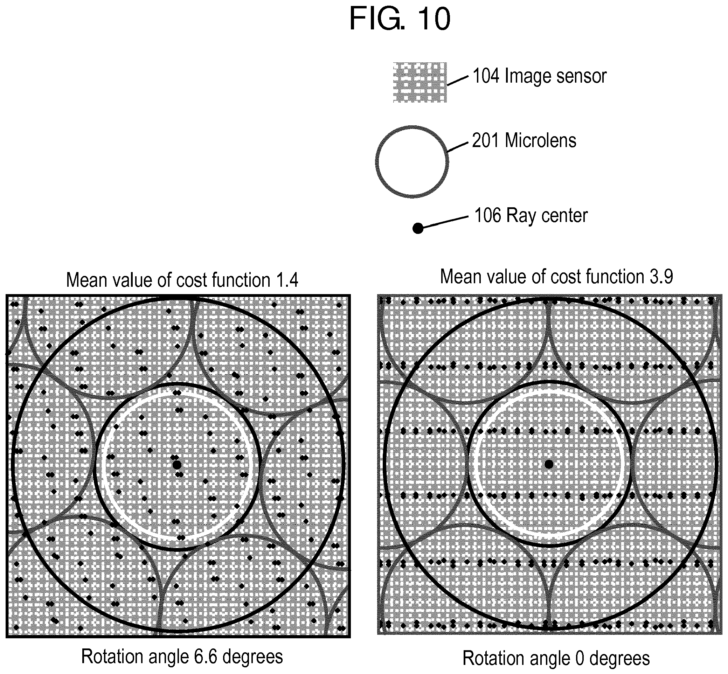

FIG. 10 shows a distribution of the ray centers at a refocusing distance of about -3.5. The left-hand side shows a distribution of the ray centers when the vertical rotation angle of microlens array 103 relative to image sensor 104 is 6.6 degrees; the right-hand side shows a distribution of the ray centers when the vertical rotation angle of microlens array 103 relative to image sensor 104 is 0 degrees. A mean value of the cost function is 1.4 when the rotation angle of microlens array 103 is 6.6 degrees; a mean value of the cost function is 3.9 when the vertical rotation angle of microlens array 103 relative to image sensor 104 is 0 degrees.

FIGS. 8 to 10 suggest the following: When the distribution of the ray centers having a mean value of the cost function of 1.4 is compared with the distribution of the ray centers having a mean value of the cost function of 3.9, the ray centers in the distribution having a mean value of the cost function of 1.4 are less overlapped and more densely distributed on virtual image plane 105 than the ray centers in the distribution having a mean value of the cost function of 3.9. Likewise, the ray centers in the distributions having mean values of the cost function of 1.1 and 1.5 are densely distributed on virtual image plane 105, while the ray centers in the distribution having a mean value of the cost function of 4.8 are overlapped.

Thus, it can be visually confirmed from FIGS. 8 to 10 that the lower the mean value of the cost function is, the more densely the ray centers are distributed on virtual image plane 105. That is, as the mean value of the cost function is lower, a ray center is present closer to a pixel to be obtained by reconstruction when an image is reconstructed so that the resolution of a refocused image is increased.

It also can be found from FIG. 7 that the mean values of the cost function are generally low over the refocusing distance from -5 to +5 when the vertical rotation angle of microlens array 103 relative to image sensor 104 is 6.6 degrees as compared with when the vertical rotation angle of microlens array 103 relative to image sensor 104 is 0 degrees.

Thus, the vertical rotation angle of microlens array 103 relative to image sensor 104 improves the resolution of the refocused image in reconstructing an image.

While it is described that a vertical rotation angle of microlens array 103 relative to image sensor 104 is 0 degrees, the vertical rotation angle may be less than or equal to 0.2 degrees in practice, for example, due to limited accuracy in manufacturing. In the exemplary embodiment, however, the vertical rotation angle of microlens array 103 relative to image sensor 104 is intended to be a rotation angle greater than or equal to about 1 degree regardless of the limited accuracy in manufacturing.

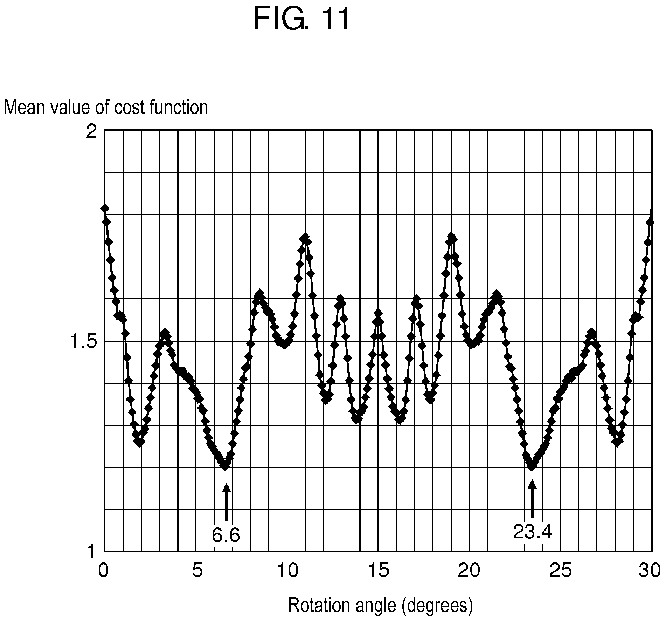

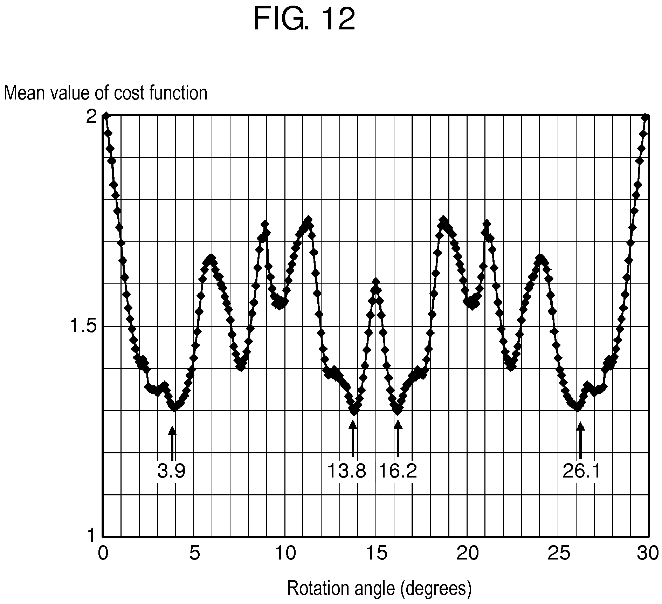

Furthermore, an optimum rotation angle for microlens array 103 in another configuration also has been found. FIG. 11 shows mean values of the cost function for rotation angles of another microlens array relative to the image sensor according to the first exemplary embodiment. FIG. 12 shows mean values of the cost function for rotation angles of yet another microlens array relative to the image sensor according to the first exemplary embodiment.

FIG. 11 shows mean values of the cost function for vertical rotation angles of microlens array 103 relative to image sensor 104, where microlens array 103 having a diameter of about 17 pixels is arranged in a honeycomb structure and pixels of image sensor 104 are arranged in a Bayer array. It has been found that mean values of the cost function are local minima when vertical rotation angles of microlens array 103 relative to image sensor 104 are about 6.6 degrees and about 23.4 degrees and the resolution of the refocused image is improved.

FIG. 12 shows mean values of the cost function for vertical rotation angles of microlens array 103 relative to image sensor 104, where microlens array 103 having a diameter of about 16 pixels is arranged in a honeycomb structure and pixels of image sensor 104 are arranged in a Bayer array. It has been found that mean values of the cost function are local minima when vertical rotation angles of microlens array 103 relative to image sensor 104 are about 3.9 degrees, about 13.8 degrees, about 16.2 degrees, and about 26.1 degrees and the resolution of the refocused image are improved.

[1-4. Advantageous effects]

As described above, the image capture device of the present disclosure, which is capable of recording light information comprised of the traveling direction of light and the intensity for the traveling direction, includes the main lens, the image sensor, the microlens array that is placed between the main lens and the image sensor and has a predetermined vertical rotation angle relative to the image sensor, and the signal processing unit for generating a refocused image on the virtual image plane at any given focal position using the light information.

The image capture device of the present disclosure can improve the image resolution when the refocused image is generated by reconstructing an image accordingly.

INDUSTRIAL APPLICABILITY

The image capture device of the present disclosure is applicable to a light-field camera and, in particular, to light-field cameras for use in a vehicle camera, surveillance camera, digital camera, movie camera, wearable camera, etc.

REFERENCE MARKS IN THE DRAWINGS

| | |
|---|---|
| 100 | Light-field camera |
| 101 | Subject |
| 102 | Main lens |
| 103 | Microlens array |
| 104 | Image sensor |
| 105 | Virtual image plane |
| 106 | Ray center |
| 201 | Microlens |
| 210, 220 | Distribution of ray centers |
| 310 | Imaging unit |
| 320 | Signal processing unit |
| 401 | i-th microlens |
| 402 | Center position |
| 403 | Pixel |
| 404 | Direction vector |
| 405 | Coordinate of ray center |

**Claims**

1. An image capture device capable of recording light information including a traveling direction of light and intensity (of the light) in the traveling direction, the image capture device comprising:

   a main lens;
   an image sensor;
   a microlens array that is placed between the main lens and the image sensor and has a predetermined vertical rotation angle relative to the image sensor; and
   a signal processing unit for generating a refocused image on a virtual image plane at any given focal position using the light information.

2. The image capture device according to claim 1,
   wherein the predetermined vertical rotation angle is greater than or equal to about 1.0 degrees.

3. The image capture device according to claim 1,
   wherein the predetermined vertical rotation angle is determined by searching for a local minimum of a cost function that evaluates a distance between a position of a ray center and a position of a pixel that constructs the refocused image, where the position of the ray center is a point at which a light ray projected from the image sensor onto the virtual image plane in a direction of the light ray intersects the virtual image plane.

4. The image capture device according to claim 3,
   wherein the any given focal position is in a range from -5 to +5 in a ratio relative to a distance between the microlens array and the image sensor.

# FIG. 1

EP 3 116 216 A1

# FIG. 2

104 Image sensor

201 Microlens

106 Ray center

210

220

# FIG. 3

# FIG. 4

```
        ┌──────────┐
        │  Start   │
        └──────────┘
             │        S501
             ▼
        ┌──────────┐
        │Initialize│
        └──────────┘
             │
             ▼
         S502
      ╱ Calculated ╲      No
     ╱ for all of virtual ╲ ────────────┐
     ╲ image planes?      ╱              │  S503
      ╲                 ╱                ▼
        Yes                    ┌─────────────────────────┐
         │                     │ Virtual image plane is set│
         │                     └─────────────────────────┘
         │                               │
         │                          S504  ▼
         │                      ╱ Calculated for all ╲   No
         │                     ╱      pixcels?        ╲ ──────┐
         │                      ╲                    ╱        │  S505
         │                        Yes                         ▼
         │                         │          ┌────────────────────────┐
         │                         │          │ Obtain position of pixel │
         │                         │          └────────────────────────┘
         │                         │                     │  S506
         │                         │                     ▼
         │                         │          ┌──────────────────────────┐
         │                         │          │Identify position of ray center│
         │                         │          └──────────────────────────┘
         │                         │                     │  S507
         │                         │                     ▼
         │                         │          ┌────────────────────┐
         │                         │          │ Calculate cost value │
         │                         │          └────────────────────┘
         ▼
    ┌──────────┐
    │   End    │
    └──────────┘
```

# FIG. 5

104 Image sensor

201 Microlens

106 Ray center

FIG. 6

Mean value of cost function

Rotation angle (degrees)

FIG. 7

Mean value of cost function

Refocusing distance

EP 3 116 216 A1

FIG. 8

104 Image sensor

201 Microlens

106 Ray center

Mean value of cost function 1.4

Rotation angle 6.6 degrees

Mean value of cost function 4.8

Rotation angle 0 degrees

## FIG. 9

104 Image sensor

201 Microlens

106 Ray center

Mean value of cost function 1.1

Rotation angle 0 degrees

Mean value of cost function 1.5

Rotation angle 6.6 degrees

# FIG. 10

104 Image sensor

201 Microlens

106 Ray center

Mean value of cost function 1.4

Mean value of cost function 3.9

Rotation angle 6.6 degrees

Rotation angle 0 degrees

# FIG. 11

EP 3 116 216 A1

Mean value of cost function

Rotation angle (degrees)

FIG. 12

Mean value of cost function

Rotation angle (degrees)

EP 3 116 216 A1

**INTERNATIONAL SEARCH REPORT**

| International application No. |
|---|
| PCT/JP2014/006065 |

| A. CLASSIFICATION OF SUBJECT MATTER |
|---|
| *H04N5/369*(2011.01)i, *G02B13/00*(2006.01)i |

According to International Patent Classification (IPC) or to both national classification and IPC

| B. FIELDS SEARCHED |
|---|

Minimum documentation searched (classification system followed by classification symbols)
H04N5/369, G02B13/00

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2012-524467 A (Refocus Imaging, Inc.), 11 October 2012 (11.10.2012), paragraphs [0040], [0106] to [0122]; fig. 6 & US 2010/0128145 A1 & WO 2010/120591 A1 | 1,2 |
| A | WO 2013/069292 A1 (Panasonic Corp.), 16 May 2013 (16.05.2013), paragraphs [0017] to [0080] & US 2014/0161368 A | 1-4 |

☐ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 January 2015 (06.01.15) | 20 January 2015 (20.01.15) |

| Name and mailing address of the ISA/ | Authorized officer |
|---|---|
| Japan Patent Office | |
| Facsimile No. | Telephone No. |

Form PCT/ISA/210 (second sheet) (July 2009)

## REFERENCES CITED IN THE DESCRIPTION

**Non-patent literature cited in the description**

- **REN. NG et al.** Light Field Photography with a Hand-Held Plenoptic Camera. *Stanford Tech Report CTSR 2005-2*